# EUROPÄISCHE PATENTSCHRIFT

(11) **EP 3 542 962 B1**
(45) Veröffentlichungstag und Bekanntmachung des Hinweises auf die Patenterteilung: **11.05.2022**
(21) Anmeldenummer: 19153962.6
(22) Anmeldetag: 28.01.2019
(51) Int. Cl.: B25B 1/24, B23Q 3/10, B25B 5/00, F16B 5/00

(54) **SYSTEM ZUM UNTERSTÜTZEN BEIM SPANNEN EINES WERKSTÜCKS**
SYSTEM FOR ASSISTING IN THE CLAMPING OF A WORKPIECE
SYSTÈME DE SUPPORT LORS DU SERRAGE D'UNE PIÈCE À USINER

(30) Priorität: 02.02.2018 DE 202018100586 U
(43) Veröffentlichungstag der Anmeldung: 25.09.2019
(73) Patentinhaber: Röwekämper, Felix, 49477 Ibbenbüren (DE)
(72) Erfinder: Röwekämper, Felix, 49477 Ibbenbüren (DE)
(74) Vertreter: BSB Patentanwälte Schütte & Engelen Partnerschaft mbB

(56) Entgegenhaltungen:
- EP-A1- 0 639 430
- GB-A- 1 116 665
- US-A- 4 496 139

## Beschreibung

Die vorliegende Erfindung betrifft ein System, gemäß dem Oberbegriff des Patentanspruchs 1, zum Unterstützen beim Spannen eines Werkstücks auf insbesondere einem mit Klemmnuten und insbesondere T-Nuten ausgerüsteten Maschinentisch einer Werkzeugmaschine wie zum Beispiel einer Bohrmaschine. Das erfindungsgemäße System kann direkt zum Spannen eines Werkstücks dienen oder es kann daran beispielsweise ein handelsüblicher Maschinenschraubstock angeordnet und insbesondere befestigt werden.

Die EP 0 639 430 A1 offenbart eine Spanneinrichtung mit den Merkmalen des Oberbegriffs des Anspruchs 1.

Im Stand der Technik sind weitere verschiedene Verfahren und Vorrichtungen zum Befestigen eines Maschinenschraubstocks auf einem Maschinentisch bekannt geworden. Bekannt geworden ist es beispielsweise, T-Nutensteine in die zugehörigen T-Nuten in Maschinentischen einzuführen und für die Montage Spannmittel zu benutzen. Das Verschrauben des Maschinenschraubstocks stellt die einfachste Möglichkeit dar. Dazu wird ein T-Nutenstein in eine T-Nute in einem Maschinentisch eingeführt, der Maschinenschraubstock mit einem entsprechenden Befestigungsloch darüber positioniert und eine Schraube in den T-Nutenstein eingeschraubt, um dem Maschinenschraubstock auf der ersten Seite zu befestigen. Eine weitere Schraube wird in einen weiteren T-Nutenstein auf der anderen Seite des Maschinenschraubstocks eingeschraubt und somit der Maschinenschraubstock gesichert. Dazu eignen sich beispielsweise handelsübliche Schrauben, welcher in die Schraublanglöcher eines Maschinenschraubstocks eingeführt werden und in die T-Nutensteine verschraubt werden. Dabei wird jedoch die Beweglichkeit des Maschinenschraubstocks stark eingeschränkt. Des Weiteren muss darauf geachtet werden, dass der ausgerichtete Maschinenschraubstock während des Spannvorgangs nicht versehentlich verschoben wird. Dann muss die Prozedur noch einmal wiederholt werden, um den Maschinenschraubstock an der geeigneten Position sicher zu befestigen.

Eine andere Möglichkeit ist das Spannen eines Maschinenschraubstocks durch Kraftspanner oder Ähnliches. Dabei stellen externe Spannmittel eine weitere Möglichkeit des Aufspannens dar. Auch hier werden regelmäßig T-Nutensteine auf dem Maschinentisch montiert. Die Kraftspanner weisen einen Körper auf, der eine Kraftübersetzung in Form beispielsweise eines Getriebes umfasst. Die Kraftübersetzung leitet die eingebrachte Kraft auf einen Spannarm weiter, welcher daraufhin abgesenkt wird. Der Spannarm wird so platziert, dass dieser über dem Maschinenschraubstock steht. Bei dessen Betätigung senkt sich also der Spannarm und leitet seine Kraft vertikal auf den Maschinenschraubstock weiter. Der Maschinenschraubstock wird somit auf dem Maschinentisch fixiert. Der Schraubstock muss vor dem Spannvorgang ausgerichtet werden und darf währenddessen nicht versehentlich verschoben werden. Des Weiteren muss darauf geachtet werden, dass genügend Platz auf dem Maschinentisch verfügbar ist, um die Kraftspanner platzieren zu können. Diese Methode funktioniert, ist aber aufwendig und außerdem sind diese Spannmittel teuer.

Es ist deshalb die Aufgabe der vorliegenden Erfindung, das Aufspannen eines Maschinenschraubstocks bedienerfreundlicher und schneller zu gestalten.

Diese Aufgabe wird durch ein System mit den Merkmalen des Anspruchs 1 gelöst. Bevorzugte Weiterbildungen der Erfindung sind Gegenstand der Unteransprüche. Weitere Vorteile und Merkmale der Erfindung ergeben sich aus der allgemeinen Beschreibung und der Beschreibung der Ausführungsbeispiele.

Ein erfindungsgemäßes System zum Unterstützen beim Spannen eines Werkstücks auf insbesondere einem mit Klemmnuten und insbesondere T-Nuten ausgerüsteten Maschinentisch einer Werkzeugmaschine wie zum Beispiel einer Bohrmaschine umfasst einen Grundkörper. In dem Grundkörper ist ein insbesondere stabförmiges Spannteil aufgenommen, welches sich innerhalb einer Aufnahme des Grundkörpers in einer Längsrichtung zwischen zwei Enden erstreckt. Das Spannteil ist über eine Gewindespindel höhenverstellbar gehalten. Die Gewindespindel wird in einer Durchgangsöffnung des Grundkörpers geführt. Die Gewindespindel kann sich an dem Grundkörper abstützen. Die Gewindespindel weist ein Werkzeugende auf. Bei einer Drehung der Gewindespindel erfolgt eine Höhenverstellung des Spannteils. Das Spannteil umfasst ein Langloch. Durch das Langloch des Spannteils ist eine Spannschraube geführt. Die Spannschraube umfasst ein vergrößertes Schraubteil und stützt sich mit dem Schraubteil (mittelbar oder unmittelbar) an dem Spannteil ab. Die Spannschraube ist mit einem in einer Klemmnut des Maschinentischs anordnenbaren bzw. angeordneten Klemmstein verbindbar. Durch eine Höhenverstellung der Gewindespindel ist die Spannschraube spannbar und der Grundkörper ist z. B. auf einem Maschinentisch oder dergleichen klemmbar. Der Grundkörper ist vor einer Spannung der Spannschraube um die Spannschraube herum schwenkbar und ist innerhalb des Langloches verschiebbar, um den Grundkörper z. B. auf dem Maschinentisch bedarfsweise auszurichten. Das Spannteil ist an einem der beiden Enden über die Gewindespindel höhenverstellbar gehalten.

Das erfindungsgemäße System hat viele Vorteile. Ein erheblicher Vorteil des erfindungsgemäßen Systems besteht darin, dass eine erheblich leichtere Ausrichtung des Systems gegenüber dem Stand der Technik ermöglicht wird. Der Grundkörper kann einfach auf einem Maschinentisch verschwenkt werden, ohne Klemmsteine entnehmen zu müssen. Vorzugsweise ist durch Befestigung nur einer einzigen Spannschraube der Grundkörper fest auf dem Maschinentisch befestigt.

Vorzugsweise ist das Spannteil an einem ersten Ende über die Gewindespindel höhenverstellbar gehalten und ist an einem zweiten Ende um eine horizontale oder wenigstens etwa horizontal ausgerichtete Achse verschwenkbar insbesondere an dem Grundkörper aufgenommen. Denkbar ist es aber auch, dass das Spannteil an oder in der Nähe beider Enden über jeweils eine Gewindespindel höhenverstellbar gehalten wird. Zur Fixierung des Grundkörpers auf dem Maschinentisch ist es dann möglich, eine oder beide Gewindespindel(n) zu betätigen, um eine feste Fixierung des Grundkörpers auf dem Maschinentisch zu erreichen. Durch entsprechende Toleranzen oder eine entsprechende konstruktive Ausgestaltung kann es auch reichen, nur eine Gewindespindel zu drehen, um den Grundkörper zu befestigen, auch wenn an beiden Enden des Spannteils jeweils eine Gewindespindel vorgesehen ist. In einfacheren und bevorzugten Ausgestaltungen ist das Spannteil lang gestreckt ausgeführt und wird am ersten Ende oder in der Nähe des ersten Endes von der Gewindespindel höhenverstellbar gehalten und es wird am zweiten Ende um eine horizontale Achse verschwenkbar aufgenommen.

In vorteilhaften Weiterbildungen ist das Spannteil um eine zur Grundfläche (Auflagefläche auf einem Maschinentisch) des Grundkörpers senkrechte Achse im Wesentlichen drehfest in der Aufnahme des Grundkörpers aufgenommen. Dadurch bildet die Aufnahme oder es bilden entsprechende Wandungen an dem Grundkörper, die die Aufnahme begrenzen, ein Gegenlager. Dadurch wird sichergestellt, dass bei einer Verdrehung der Gewindespindel das Spannteil drehfest in der Aufnahme verbleibt. Bei einer Drehung der Gewindespindel wird das Spannteil in seiner Höhe verstellt.

Die Spannschraube stützt sich mit dem vergrößerten Schraubteil an dem Spannteil ab und ist mit dem anderen Ende insbesondere mit dem Klemmstein in der Klemmnut des Maschinentischs verbunden. Zur Ausrichtung reicht es zunächst, die Spannschraube handfest oder etwa fest anzuziehen. Die nötige Klemmkraft wird anschließend aufgebracht, indem die Gewindespindel in der Höhe verstellt wird. Dadurch verändert sich die Höhe des Spannteils und der Grundkörper wird fest auf dem Maschinentisch geklemmt.

In allen Ausgestaltungen ist es bevorzugt, dass die Aufnahme höher ausgebildet ist als das Spannteil. Dann berührt das Spannteil regelmäßig den Maschinentisch nicht. Insbesondere berührt das Spannteil den Maschinentisch in der gespannten Stellung nicht. Dadurch wird eine sichere Fixierung erreicht.

Vorzugsweise umfasst die Gewindespindel einen Schraubenkopf als Werkzeugende. Beispielsweise kann die Gewindespindel einen Außensechskant als Werkzeugende umfassen, der mit einem handelsüblichen Schraubenschlüssel ergriffen werden kann, um die Gewindespindel zu drehen und den Grundkörper zu klemmen. Möglich ist es aber auch, dass am Ende der Gewindespindel beispielsweise ein Innensechskant oder ein Torx oder dergleichen ausgebildet ist, um die Gewindespindel bequem drehen zu können.

In allen Ausgestaltungen ist es möglich, dass die Durchgangsöffnung an dem Grundkörper als glatte Bohrung ausgeführt ist. Möglich ist es aber auch, dass die Durchgangsöffnung ein Innengewinde aufweist, in welches die Gewindespindel eingeschraubt ist. Wird die Durchgangsöffnung als glatte Bohrung ohne Gewinde ausgeführt, so stützt sich die Gewindespindel mit dem vergrößerten Schraubenkopf auf der Oberfläche des Grundkörpers neben der Durchgangsöffnung ab, wenn die Höhe des Spannteils verändert wird. Wenn die Durchgangsöffnung hingegen mit einem Innengewinde versehen ist, in welches die Gewindespindel eingeschraubt ist, so kann auf einen vergrößerten Schraubkopf an der Gewindespindel verzichtet werden, da die Kraftübernahme dann über das Gewinde erfolgen kann.

Es ist möglich, dass die Durchgangsöffnung nicht vollumfänglich von dem Grundkörper umgeben ist. Möglich ist es auch, dass die Durchgangsöffnung einen z. B. etwa U-förmigen oder auch V-förmigen Querschnitt aufweist und seitlich zum Ende des Grundkörpers geöffnet ausgebildet ist. Eine solche Ausgestaltung ist insbesondere möglich, wenn an der Durchgangsöffnung kein Innengewinde ausgebildet ist. Wesentlich ist jedenfalls, dass sich die Gewindespindel am Werkzeugende mittelbar oder unmittelbar an dem Grundkörper abstützt.

Vorzugsweise umfasst die Spannschraube einen Schraubenkopf oder eine Schraubmutter als Schraubteil. Die Spannschraube überträgt die nötige Klemmkraft zwischen dem Schraubteil und dem Klemmstein. Bevorzugterweise wird eine Spannschraube eingesetzt, die einen Gewindeabschnitt und einen vergrößerten Schraubenkopf am Ende umfasst, der sich auf dem Spannteil benachbart zu dem Langloch abstützt. Alternativ dazu ist es aber auch möglich, dass die Spannschraube einen Gewindeabschnitt aufweist, auf den am oberen Ende eine Schraubmutter aufgeschraubt ist, die dann eine Art von Kopf zu Verfügung stellt. Es ist auch möglich und bevorzugt, dass die Spannschraube als Schlossschraube ausgeführt oder ausgebildet ist. Die Schlossschraube verfügt vorzugsweise über ein Vierkantprofil am Schaft der Schraube.

Dieses Vierkantprofil befindet sich insbesondere im Langloch des Spannteils bzw. Spannhebels und hat in etwa die gleiche Breite.

In allen Ausgestaltungen ist es besonders bevorzugt, dass das Spannteil stabförmig und/oder als Spannhebel ausgeführt ist.

Vorzugsweise erstreckt sich das Spannteil über mehr als die Hälfte einer Länge oder über mehr als 3/4 oder mehr als 4/5 oder im Wesentlichen die vollständige Länge des Grundkörpers. Das ermöglicht eine besonders effektive Funktion.

In vorteilhaften Ausgestaltungen ist das Spannteil im Wesentlichen waagerecht innerhalb des Grundkörpers aufgenommen. Bei Ausgestaltungen, bei denen ein Ende des Spannteils schwenkbar am Grundkörper gelagert ist, ändert sich die Winkelausrichtung des Spannteils beim Spannen mit der Gewindespindel. Aufgrund der benötigten geringen Auslenkung ist das Spannteil aber in allen Fällen immer noch im Wesentlichen waagerecht innerhalb des Grundkörpers aufgenommen.

In bevorzugten Weiterbildungen erstreckt sich das Langloch über mehr als 1/3 oder mehr als die Hälfte einer Länge oder mehr als 3/4 oder mehr als 4/5 der Länge des Spannteils. Insbesondere ist eine Länge des Langlochs von wenigstens 50 mm und vorzugsweise von wenigstens 70 mm und besonders bevorzugt von wenigstens 120 mm vorgesehen. Das Langloch kann insbesondere auch eine Länge von 130 mm oder 150 mm oder mehr aufweisen. Das bedeutet, dass der Grundkörper über ein entsprechend großes Maß auf dem Maschinentisch verstellbar angeordnet ist. Zusammen mit der Winkelverschwenkbarkeit ergibt dass viele Einstellmöglichkeiten bei der Ausrichtung und Befestigung des Systems.

In vorteilhaften Weiterbildungen sind an dem Langloch seitliche Aussparungen ausgebildet. Beispielsweise können regelmäßig seitliche Aussparungen an dem Langloch ausgebildet sein. Falls dann im Betrieb sich der Grundkörper aufgrund einer zentrischen Belastung doch einmal beginnen sollte zu drehen, so kann die Spannschraube seitlich in eine Aussparung ausweichen, sodass eine weitere Bewegung praktisch ausgeschlossen ist.

In bevorzugten Weiterbildungen erstrecken sich die Aussparungen zu beiden Seiten des Langlochs.

In bevorzugten Ausgestaltungen ist der Klemmstein mit einer abstehenden Gewindestange ausgerüstet. Die Gewindestange kann separat sein oder einstückig mit dem Klemmstein ausgebildet sein. Möglich ist es auch, dass die Spannschraube eine separate oder einstückig damit ausgebildete Gewindestange aufweist. Dann weist der Klemmstein vorzugsweise ein Innengewinde auf.

In allen Ausgestaltungen ist es bevorzugt, dass an dem System und insbesondere an dem Grundkörper zwei Klemmbacken umfasst sind, von denen wenigstens eine Klemmbacke verstellbar ist. Möglich ist es, dass die Klemmbacken direkt an dem Grundkörper ausgebildet oder montiert sind. Möglich ist es aber auch, dass die Klemmbacken an einem separaten Maschinenschraubstock ausgebildet sind, die auf dem Grundkörper montiert wird.

Es ist bevorzugt, dass an dem Grundkörper ein Maschinenschraubstock ausgebildet und/oder ein Maschinenschraubstock an dem Grundkörper aufgenommen und befestigt ist. Wenigstens umfasst das System einen Maschinenschraubstock.

Der Maschinenschraubstock kann fest mit dem Grundkörper verschraubt sein. Möglich ist es aber auch, dass der Maschinenschraubstock an dem Grundkörper ausgebildet ist.

In allen Ausgestaltungen ist es bevorzugt, dass die Spannschraube zwischen der Klemmnut und dem Spannteil spannbar ist, um den Grundkörper an dem Maschinentisch zu klemmen.

In allen Ausgestaltungen und Weiterbildungen kann die Spannschraube auch als sogenannte Schlossschraube ausgeführt sein. Schlossschrauben verfügen über ein Vierkantprofil am Schaft der Schraube. Dieses Vierkantprofil befindet sich im Langloch des Spannhebels und hat in etwa die gleiche Breite. Dies hat zur Folge, dass bei einer Drehung des gesamten Schraubstocks, die Schlossschraube durch ihren Vierkant mitgedreht wird und sich somit weiter in den Klemmstein bzw. T-Nutenstein schraubt. Somit wird der Schraubstock automatisch auf den Maschinentisch gespannt.

In allen Ausgestaltungen ist es möglich und bevorzugt, dass ein Maschinenschraubstock und/oder ein System wenigstens einen Sensor umfasst. Vorzugsweise ist wenigstens ein Kraftsensor umfasst. Möglich ist z. B. ein Sensor, der auf dem Piezoprinzip beruht. Möglich sind auch Sensoren, die mit einem oder mehreren Dehnmessstreifen arbeiten oder auch Sensoren, die auf Druck reagieren oder z. B. optisch die Anwesenheit eines Gegenstandes (z. B. eines Werkstücks) erfassen oder auch sonstige Sensoren.

Mit wenigstens einem Sensor ist es vorzugsweise möglich, ein Signal über wenigstens einen Klemmzustand zu erfassen. Vorzugsweise sind zwei oder mehr (gleichartige oder unterschiedliche) Sensoren umfasst. Eine Signalweitergabe kann kabelgebunden oder kabellos erfolgen. Die benötige Energie zur Signalübertragung kann bei der Bedienung des Systems generiert werden. Eine Stromversorgung kann integriert sein.

Insbesondere ist es möglich, ein Signal über einen Klemmzustand eines zu bearbeitenden Werkstücks zu erfassen und weiterzuleiten. Beispielsweise kann ein Signal für eine ausreichende Klemmung des Werkstücks weitergeleitet werden, z. B. zu der Werkzeugmaschine, mit der das Werkstück bearbeitet werden soll. Das Signal kann von der Steuerung der Werkzeugmaschine erfasst und ausgewertet werden und eine Bearbeitung nur begonnen werden, wenn das entsprechende Signal vorliegt. Das steigert die Sicherheit. Ein entsprechender Sensor kann zwischen den Klemmbacken angeordnet sein.

Es ist auch möglich und bevorzugt, wenigstens ein Signal über einen Klemmzustand des Maschinenschraubstocks an dem Maschinentisch zu erfassen und weiterzuleiten. Beispielsweise kann ein Signal für eine ausreichende Klemmung des Maschinenschraubstocks weitergeleitet werden, z. B. zu der Werkzeugmaschine, mit der das (an dem Maschinenschraubstock eingespannte) Werkstück bearbeitet werden soll. Das Signal kann von der Steuerung der Werkzeugmaschine erfasst und ausgewertet werden und eine Bearbeitung nur begonnen werden, wenn das entsprechende Signal vorliegt und somit der Maschinenschraubstock zuverlässig befestigt ist. Ein Sensor kann z. B. an der Spannschraube oder auch an dem Klemmstein oder dem Schraubteil bzw. Schraubenkopf der Spannschraube angeordnet sein oder z. B. aber an der Gewindespindel. Der Einsatz von Sensoren steigert die Sicherheit.

Besonders bevorzugt sind Sensoren zur Erfassung eines Klemmzustandes des Werkstücks (an dem Maschinenschraubstock) und des Maschinenschraubstocks (an dem Maschinentisch) vorgesehen und von dem System umfasst. Vorzugsweise ist ein Start der Bearbeitung nur möglich, wenn ein Signal für eine ausreichende Klemmung des Maschinenschraubstocks und ein Signal für eine ausreichende Klemmung des Werkstücks vorliegen. Gegebenenfalls ist es möglich, diese Abfragen manuell (mit entsprechenden Sicherheitshinweisen und Sicherheitsabfragen) zu überbrücken, um in Einzelfällen eine Bearbeitung vorzunehmen, auch wenn die Sensoren kein Signal abgeben. Das kann beispielsweise sinnvoll sein, wenn ein Werkstück so geformt ist, dass kein Signal ausgegeben wird, obwohl das Werkstück an sich zuverlässig an dem Maschinenschraubstock befestigt ist.

Regelmäßig ist ein Start der Werkzeugmaschine erst möglich, wenn ein entsprechendes Signal vorliegt.

Weitere Vorteile und Merkmale der vorliegenden Erfindung ergeben sich aus den Ausführungsbeispielen, welche im Folgenden mit Bezug auf die beiliegenden Figuren erläutert werden.

In den Figuren zeigen:
- Figur 1: eine schematische Draufsicht auf einen Maschinentisch mit darauf montierten erfindungsgemäßen Systemen;
- Figur 2: eine perspektivische Ansicht einer ersten Ausführungsform eines erfindungsgemäßen Systems;
- Figur 3: eine schematische perspektivische Ansicht des Systems nach Figur 2 von schräg unten;
- Figur 4: eine stark schematische perspektivische Ansicht eines weiteren erfindungsgemäßen Systems;
- Figur 5: das System aus Figur 4 in einer schematischen Ansicht schräg von unten;
- Figur 6: das System nach Figuren 4 und 5 in einer Ansicht von vorn; und
- Figur 7: das System der Figuren 3-6 in einem Längsschnitt in einer schematischen perspektivischen Darstellung.

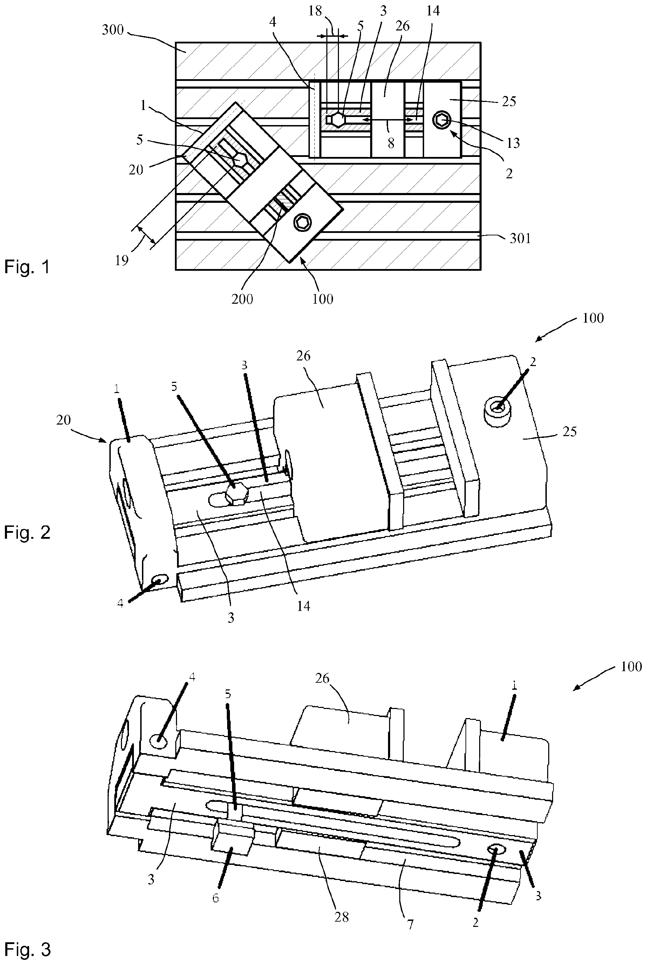

Figur 1 zeigt eine schematische Draufsicht auf einen Maschinentisch 300 einer nicht weiter dargestellten Werkzeugmaschine wie beispielsweise einer Bohrmaschine, wobei der Maschinentisch 300 mit Klemmnuten 301 und insbesondere T-Nuten ausgerüstet ist. In derartige Klemmnuten 301 können Klemmsteine 6 und insbesondere T-Nutensteine eingeführt werden, um Werkstücke direkt und/oder erfindungsgemäße Systeme 100 darauf zu fixieren.

In Figur 1 sind schematisch zwei grundsätzlich gleichartige Systeme 100 auf dem Maschinentisch 300 befestigt. Ein System 100 umfasst dabei zwei Spannbacken 25 und 26, von denen hier die Spannbacke 26 beweglich ist. In der linken Hälfte von Figur 1 ist ein Werkstück 200 zwischen den Spannbacken 25 und 26 festgeklemmt aufgenommen.

Die Systeme 100 umfassen jeweils einen Grundkörper 1, an dem in einer von oben zu erkennenden langen Aussparung ein Spannteil 3 angeordnet ist, welches sich hier über praktisch die volle Länge der Grundkörper 1 erstreckt. Das Spannteil 3 ist an jeweils einem ersten Ende 11 des Grundkörpers 1 mit einer Gewindespindel 2 verbunden, die in ein entsprechendes Gewinde des Spannteils 3 eingeschraubt ist. Am gegenüberliegenden Ende ist ein Drehpunkt bzw. eine Achse 4 vorgesehen, um die das Spannteil 3 verschwenkbar ist.

Durch diese Konstruktion wird bewirkt, dass bei einer Drehung der Gewindespindel 2 eine Höhenverstellung des ersten Endes des Spannteils 3 bewirkt wird.

Zum bequemen Drehen der Gewindespindel 2 verfügt diese über ein Werkzeugende 13, welches hier als Schraubenkopf ausgeführt ist. Das Werkzeugende 13 kann als Außensechskant oder als Innensechskant oder als ein anderes geeignetes Werkzeugende ausgebildet sein.

In dem Spannteil 3 ist ein Langloch 14 ausgebildet, welches sich fast über die vollständige Länge des Spannteils 3 erstreckt. In dem Langloch 14 ist eine Spannschraube 5 aufgenommen, deren vergrößerter Schraubenkopf 15 größere Abmessungen aufweist als die Breite des Langlochs 14, sodass der Schraubenkopf 15 der Spannschraube 5 auf der Oberseite des Spannteils 3 aufliegt.

Die Spannschraube 5 ist hier mit einem Innengewinde in einem in Figur 1 nicht dargestellten Klemmstein 6, der in der Klemmnut 301 angeordnet ist, verschraubt. Nach einem ersten Anziehen der Spannschraube mit der Hand wird anschließend die Gewindespindel 2 derart gedreht, dass sich das Spannteil 3 anhebt. Dadurch wird eine feste Klemmung des Spannteils 3 zwischen dem Schraubenkopf 15 der Spannschraube 5 und dem Klemmstein 6 erzielt. Dadurch wird eine zuverlässige Fixierung des Systems 100 erreicht.

Durch das Langloch 14 ist eine weite Verstellbarkeit des Grundkörpers 1 auf dem Maschinentisch 300 möglich. So ist bei dem in Figur 1 weiter rechts abgebildeten System 100 nur ein Abstand 18 zwischen der Spannschraube und dem Ende des Langlochs 14 vorhanden, während der Abstand 19 bei dem weiter links abgebildeten System 100 erheblich größer ist. Insgesamt wird eine Verstellung über eine Länge von 100 mm oder 150 mm oder mehr ermöglicht.

Im Stand der Technik hingegen war nur kleine Verstellungen möglich, bevor ein Klemmstein aus der zugehörigen Klemmnut entnommen werden musste.

In den Figuren 2 und 3 ist ein Ausführungsbeispiel eines Systems 100 in einer Perspektive von oben und von unten abgebildet, wobei hier an dem Grundkörper 1 direkt ein Maschinenschraubstock 20 ausgebildet ist.

An dem Grundkörper 1 sind zwei Klemmbacken 25 und 26 vorgesehen, von denen die zweite Klemmbacke 26 beweglich angeordnet ist. Unterhalb der Klemmbacken 25 und 26 verläuft das Spannteil 3, welches hier als Spannstab bzw. Spannhebel ausgebildet ist. Das Spannteil 3 ist am ersten Ende 11 mit einem Gewinde ausgerüstet, in welches die Gewindespindel 2 eingeschraubt ist, um die Höhe des Spannteils 3 zu verändern.

Am anderen Ende 12 ist das Spannteil 3 über die Achse 4 schwenkbar an dem Grundkörper gelagert.

Die Spannschraube 5 erstreckt sich durch das Langloch 14 in dem Spannteil 3 hindurch nach unten. In Figur 3 ist von unten der Klemmstein 6 zu erkennen, der im Betrieb in einer Klemmnut 301 des Maschinentischs 300 angeordnet wird.

In Figur 2 ist in der Draufsicht der Kopf 15 der Spannschraube 5 zu erkennen.

Das Spannteil 3 wird in einer Aufnahme 7 des Grundkörpers gehalten und ist dort zur Vertikalen verdrehsicher aufgenommen. Die Klemmbacke 26 kann entsprechende Führungen und Führungsbahnen aufweisen.

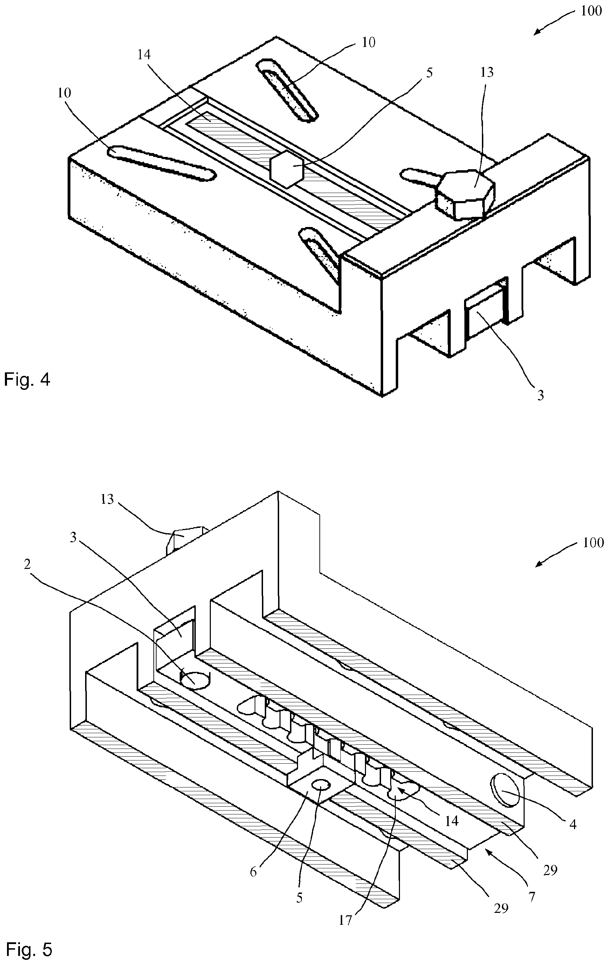

Während im Ausführungsbeispiel gemäß der Figuren 2 und 3 der Maschinenschraubstock 20 direkt an dem Grundkörper 1 ausgebildet ist, ist im Ausführungsbeispiel gemäß der Figuren 4 bis 7 der Maschinenschraubstock 20 ein separates Teil, welches mit dem Grundkörper 1 des Systems 100 insbesondere verschraubt wird, um den Maschinenschraubstock 20 fest an dem Grundkörper 1 aufzunehmen.

Zur Befestigung handelsüblicher Maschinenschraubstöcke 20 sind Befestigungsmittel 10 in Form länglich ausgebildeter Löcher oder dergleichen an dem Grundkörper 1 vorgesehen.

Des weiteren ist an dem Grundkörper 1 auch ein Spannteil 3 aufgenommen, welches über ein Langloch 14 verfügt, in welchem die Spannschraube 5 über der Länge des Langlochs 14 verschiebbar angeordnet ist, um eine entsprechende Justage des Maschinenschraubstocks 20 zu bewirken. Das Spannteil 3 ist in Fig. 4 nur stark schematisch und nicht maßstäblich auf der Oberseite des Grundkörpers eingezeichnet.

An dem ersten Ende 11 ist die Gewindespindel 2 mit dem Werkzeugende 13 vorgesehen und in ein entsprechendes Innengewinde an dem Spannteil 3 geschraubt. An dem anderen Ende ist das Spannteil 3 über eine Achse 4 in dem Grundkörper 1 verschwenkbar gehalten.

Figur 5 zeigt eine perspektivische Ansicht schräg von unten, wobei die auf einem Maschinentisch 300 aufliegenden Flächen hier schraffiert dargestellt sind.

Zwischen den Wandungen 29 am Grundkörper 1 ist die Aufnahme 7 ausgebildet, in welcher das Spannteil 3 angeordnet ist. Das Spannteil 3 ist um die Schwenkachse 4 verschwenkbar und ist am anderen Ende über die Gewindespindel 2 in der Höhe verstellbar.

Im zentralen Bereich des Spannteils 3 ist das Langloch 14 zu erkennen, über dessen Länge der Grundkörper 1 und der Maschinenschraubstock 20 in Längsrichtung 8 verstellbar sind.

Hier sind an den Seiten des Langlochs jeweils auf beiden Seiten Aussparungen 17 zu erkennen, die zum Beispiel rechtwinklig zum eigentlichen Langloch ausgebildet sind und und ein Einhaken der Spannschraube 5 bei schlagartiger Drehbewegung bewirken.

Von unten ist auch der Klemmstein 6 mit der Gewindestange der Spannschraube 5 zu erkennen, die darin eingeschraubt ist.

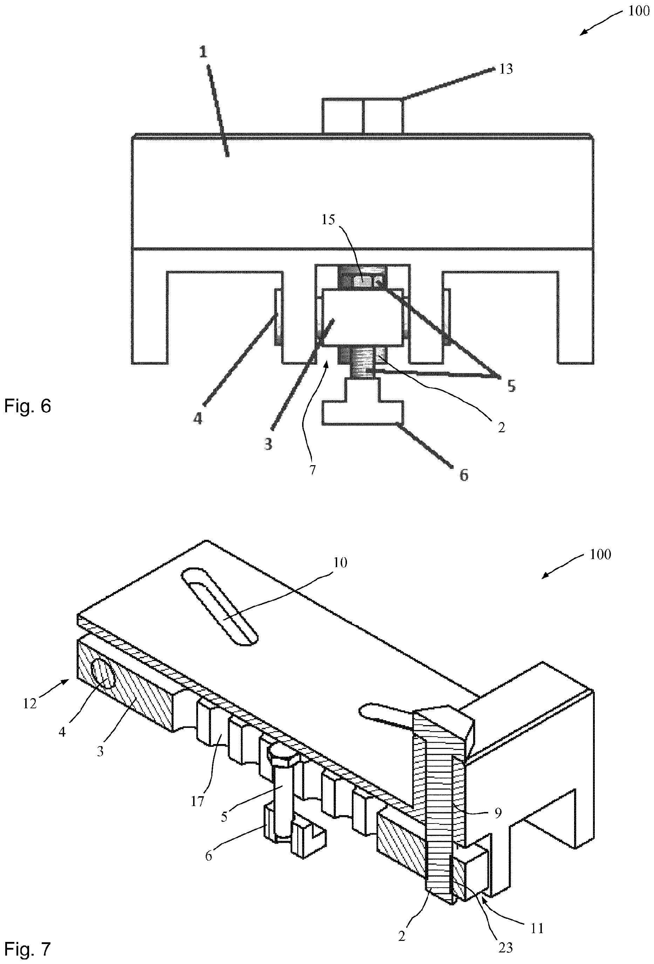

Figur 6 zeigt eine Vorderansicht des Systems 100, wobei mittig das Spannteil 3 zwischen den Wandungen 29 aufgenommen ist. Die Schwenkachse 4 des Spannteils 3 ist erkennbar. Zur Höhenverstellung des Spannteils 3 dient die Gewindespindel 2 mit dem Werkzeugende 13. Durch Drehen der Gewindespindel 2 wird die Höhe des Spannteils 3 verstellt. Bei einer Höhenverstellung des Spannteils 3 nach oben wird die Oberseite des Spannteils 3 gegen die Unterseite des Schraubenkopfes 15 der Spannschraube 5 gedrückt, wodurch der Klemmstein 6 in der Klemmnut 301 nach oben gezogen wird. Dadurch wird eine effektive Klemmung des Grundkörpers 1 auf dem Maschinentisch 300 bewirkt.

Figur 7 zeigt einen schematischen perspektivischen Querschnitt durch das System 100, wobei hier die Schwenkachse 4 an dem zweiten Ende 12 und die Gewindespindel 2 an dem ersten Ende 11 im Schnitt zu erkennen sind. Im Bereich der Gewindespindel 2 ist das Innengewinde 23 an dem Spannteil 3 zu erkennen.

Gut erkennbar sind auch die seitlichen Aussparungen 17 entlang des Langlochs 14.

Auf der Oberseite des Grundkörpers 1 sind die Befestigungsmittel 10 zu erkennen, auf denen ein Maschinenschraubstock 20 zu befestigen ist. Dabei ist die Spannschraube 5 vorzugsweise von oben zugänglich.

Insgesamt bildet die Basis des Systems 100 der Grundkörper 1. Auf diesem können handelsübliche Maschinenschraubstöcke platziert werden oder sie sind auf dem Grundkörper 1 ausgebildet. Durch entsprechende Befestigungsmittel 10 kann ein Maschinenschraubstock 20 auf dem Grundkörper 1 verschraubt und somit gesichert werden.

Vorzugsweise werden als T-Nutensteine ausgebildete Klemmsteine 6 in entsprechende Klemmnuten 301 bzw. T-Nuten des Maschinentisches 300 eingesetzt. In den Klemmstein 6 wird dann eine Spannschraube 5 (z. B. locker) eingeschraubt. Der Schaft der Spannschraube 5 verläuft dabei durch das Langloch 14 des Spannteils bzw. Spannhebels 3. Der Spannhebel 3 erstreckt sich vorzugsweise mittig und insbesondere etwa waagerecht und besonders bevorzugt in voller Länge unterhalb des Grundkörpers 1. Durch den Drehpunkt 4 ist der Spannhebel an einem Ende drehbar in oder an dem Grundkörper 1 gelagert. An dem gegenüberliegenden Ende ist eine Gewindebohrung in das Spannteil 3 eingebracht, in der die Gewindespindel 2 eingesetzt ist. Die Gewindespindel 2 verläuft durch eine Durchgangsöffnung 9 im Grundkörper und stützt sich durch den Schraubenkopf auf dem Grundkörper 1 ab. An dem Spannhebel können an dem Langloch 14 jeweils rechts und links Aussparungen vorgesehen sein, die z. B. rechtwinklig zum eigentlichen Langloch 14 verlaufen. Dadurch wird ein Einhaken der Spannschraube bei schlagartiger Drehbewegung erreicht.

Um den Grundkörper auf einem Maschinentisch 300 aufzuspannen, wird die Gewindespindel 2 beispielsweise mit einem handelsüblichen Schraubenschlüssel in Rotation (in der Regel im Uhrzeigersinn, wenn ein Rechtsgewinde eingesetzt wird) versetzt. Durch die Rotation der Gewindespindel wird der Spannhebel durch seine Gewindebohrung mit dem Gewinde 23 hochgeschraubt. Durch die drehbare Lagerung an dem Drehpunkt 4 wird der Spannhebel jedoch nur einseitig hochgeschraubt. Der Spannhebel führt somit eine (leichte) Schwenkbewegung aus. Da sich die Spannschraube 5 durch ihren Schraubenkopf 15 auf dem Spannhebel 3 abstützt, wird die Spannschraube durch die Schwenkbewegung des Spannhebels 3 angehoben. Damit wird auch der Klemmstein (T-Nutenstein) innerhalb der Klemmnut (T-Nut) im Maschinentisch 300 angehoben.

Aufgrund der Geometrie des Klemmsteins 6 kann dieser jedoch nur minimal angehoben werden, und zwar nur so weit, bis der Klemmstein vollständig in der Klemmnut anliegt. Anschließend wird durch die in die Gewindespindel eingebrachte Kraft über den Spannhebel und die Spannschraube und den Klemmstein und die im Maschinentisch befindliche Klemmnut und der gesamte Grundkörper fest auf dem Maschinentisch gespannt.

Eine Variante, bei der der Maschinenschraubstock 20 direkt am Grundkörper 1 ausgebildet ist, stellt eine platzsparende Lösung dar. Zum Nachrüsten vorhandener Maschinenschraubstöcke eignet sich auch die Variante, bei der Maschinenschraubstock 20 auf einem Grundkörper befestigbar ist.

### Bezugszeichenliste:

- 1: Grundkörper
- 2: Gewindespindel
- 3: Spannteil, Spannstab, Spannhebel
- 4: Achse, Drehpunkt
- 5: Spannschraube
- 6: Klemmstein, T-Nutenstein
- 7: Aufnahme
- 8: Längsrichtung
- 9: Durchgangsöffnung
- 10: Befestigungsmittel
- 11: erste Ende
- 12: zweites Ende
- 13: Werkzeugende von 2, Schraubenkopf von 2
- 14: Langloch
- 15: Schraubteil, Kopf von 5
- 17: Aussparung
- 18: Abstand
- 19: Abstand
- 20: Maschinenschraubstock
- 23: Gewinde in 3
- 25: erste Backe (feste Backe)
- 26: zweite Backe (beweglich)
- 28: Führung von 26
- 100: System, Spannmechanismus
- 200: Werkstück
- 300: Maschinentisch
- 301: Klemmnut

## Patentansprüche

1. System (100) zum Unterstützen beim Spannen eines Werkstücks (200) auf insbesondere einem mit Klemmnuten (301) und insbesondere T-Nuten ausgerüsteten Maschinentisch (300) einer Werkzeugmaschine wie z. B. einer Bohrmaschine, umfassend einen Grundkörper (1) und einen in dem Grundkörper (1) aufgenommenen Spannteil (3), welcher sich innerhalb einer Aufnahme (7) des Grundkörpers (1) in einer Längsrichtung (8) zwischen zwei Enden (11, 12) erstreckt und wobei das Spannteil (3) über eine Gewindespindel (2) des Systems (100) höhenverstellbar gehalten ist, wobei die Gewindespindel (2) in einer Durchgangsöffnung (9) des Grundkörpers (1) geführt wird und sich an dem Grundkörper (1) abstützt und wobei die Gewindespindel (2) ein Werkzeugende (13) aufweist und wobei bei einer Drehung der Gewindespindel (2) eine Höhenverstellung des Spannteils (3) erfolgt, wobei das Spannteil (3) ein Langloch (14) umfasst und wobei durch das Langloch (14) des Spannteils (3) eine Spannschraube (5) des Systems (100) geführt ist, wobei die Spannschraube (5) ein vergrößertes Schraubteil (15) umfasst und sich mit dem Schraubteil (15) an dem Spannteil (3) abstützt und wobei die Spannschraube (5) mit einem in einer Klemmnut (301) des Maschinentischs (300) angeordneten Klemmstein (6) verbindbar ist, wobei durch eine Höhenverstellung der Gewindespindel (2) die Spannschraube (5) spannbar und der Grundkörper (1) auf dem Maschinentisch (300) klemmbar ist, und wobei der Grundkörper (1) vor einer Spannung der Spannschraube (5) um die Spannschraube (5) schwenkbar und innerhalb des Langloches (14) verschiebbar ist, um den Grundkörper (1) auf dem Maschinentisch (300) auszurichten, **dadurch gekennzeichnet, dass** das Spannteil (3) an einem der beiden Enden (11, 12) über die Gewindespindel (2) höhenverstellbar gehalten ist.

2. System nach Anspruch 1, wobei das Spannteil an einem ersten Ende (11) über die Gewindespindel (2) höhenverstellbar gehalten ist und an dem zweiten Ende um eine horizontale Achse (4) verschwenkbar aufgenommen ist.

3. System (1) nach einem der vorhergehenden Ansprüche, wobei das Spannteil (3) drehfest in der Aufnahme (7) des Grundkörpers (1) aufgenommen ist.

4. System nach dem vorhergehenden Anspruch, wobei die Aufnahme (7) höher ausgebildet ist als das Spannteil (3).

5. System (1) nach einem der vorhergehenden Ansprüche, wobei die Gewindespindel (2) einen Schraubenkopf (13) als Werkzeugende umfasst.

6. System (1) nach einem der vorhergehenden Ansprüche, wobei die Durchgangsöffnung (9) ein Innengewinde aufweist, in welches die Gewindespindel (2) eingeschraubt ist.

7. System (1) nach einem der vorhergehenden Ansprüche, wobei die Spannschraube (5) einen Schraubenkopf (15) oder eine Schraubmutter als Schraubteil (15) umfasst und/oder wobei die Spannschraube als Schlossschraube ausgeführt ist.

8. System (1) nach einem der vorhergehenden Ansprüche, wobei das Spannteil (3) stabförmig ausgebildet ist und/oder wobei das Spannteil (3) im Wesentlichen waagerecht innerhalb des Grundkörpers aufgenommen ist.

9. System (1) nach einem der vorhergehenden Ansprüche, wobei sich das Spannteil (3) über mehr als die Hälfte einer Länge oder mehr als 3/4 oder mehr als 4/5 oder im Wesentlichen der vollständigen Länge des Grundkörpers (1) erstreckt und/oder wobei sich das Langloch (14) über mehr als 1/3 der Länge oder mehr als die Hälfte einer Länge oder mehr als 3/4 oder mehr als 4/5 der Länge des Spannteils (3) erstreckt.

10. System (1) nach einem der vorhergehenden Ansprüche, wobei an dem Langloch (14) seitliche Aussparungen (17) ausgebildet sind, wobei sich die Aussparungen (17) insbesondere zu beiden Seiten des Langlochs (14) erstrecken.

11. System (1) nach einem der vorhergehenden Ansprüche, wobei der Klemmstein (6) mit einem Innengewinde ausgerüstet ist und/oder wobei der Klemmstein (6) mit einer abstehenden Gewindestange ausgerüstet ist.

12. System (1) nach einem der vorhergehenden Ansprüche, wobei wenigstens zwei Klemmbacken (25, 26) umfasst sind, von denen wenigstens eine Klemmbacke (26) verstellbar ist.

13. System (1) nach einem der vorhergehenden Ansprüche, wobei an dem Grundkörper (1) ein Maschinenschraubstock (20) ausgebildet ist und/oder wobei an dem Grundkörper ein Maschinenschraubstock (20) aufgenommen und befestigt ist und/oder wobei der Maschinenschraubstock (20) mit dem Grundkörper (1) verschraubt ist oder wobei der Grundkörper (1) an dem Maschinenschraubstock (20) ausgebildet ist.

14. System (1) nach einem der vorhergehenden Ansprüche, wobei wenigstens ein Sensor umfasst ist.

## Claims

1. System (100) for assisting in the clamping of a workpiece (200) on a machine table (300), that is in particular equipped with clamping grooves (301) and in particular T-slots, of a machine tool such as a power drill, comprising a basic body (1) and a clamping part (3) accommodated in the basic body (1), extending within an accommodation (7) of the basic body (1) in a longitudinal direction (8) between two ends (11, 12), and wherein the clamping part (3) is height-adjustably retained by means of a threaded spindle (2) of the system (100), wherein the threaded spindle (2) is guided in a through hole (9) of the basic body (1) and rests on the basic body (1), and wherein the threaded spindle (2) shows a tool end (13), and wherein rotation of the threaded spindle (2) causes height adjustment of the clamping part (3), wherein the clamping part (3) comprises an elongated hole (14), and wherein a clamping screw (5) of the system (100) is guided through the elongated hole (14) of the clamping part (3), wherein the clamping screw (5) comprises an enlarged screw part (15) and rests on the clamping part (3) by means of the screw part (15), and wherein the clamping screw (5) can be connected with a clamping block (6) disposed in a clamping groove (301) of the machine table (300), wherein height adjustment of the threaded spindle (2) enables locking the clamping screw (5) and clamping the basic body (1) on the machine table (300), and wherein prior to locking the clamping screw (5), the basic body (1) can be pivoted around the clamping screw (5), and can be displaced within the elongated hole (14), so as to position the basic body (1) on the machine table (300), **characterized in that** the clamping part (3) is height-adjustably retained at one of the two ends (11, 12) by means of the threaded spindle (2).

2. The system according to claim 1, wherein the clamping part is retained at a first end (11) for height-adjustment by means of the threaded spindle (2), and is accommodated at the second end for pivoting around a horizontal axis (4).

3. The system (1) according to any of the preceding claims, wherein the clamping part (3) is non-rotatably accommodated in the accommodation (7) of the basic body (1).

4. The system according to the preceding claim, wherein the accommodation (7) is configured higher than is the clamping part (3) .

5. The system (1) according to any of the preceding claims, wherein the threaded spindle (2) comprises a screw head (13) as the tool end.

6. The system (1) according to any of the preceding claims, wherein the through hole (9) comprises an internal thread, into which the threaded spindle (2) is screwed.

7. The system (1) according to any of the preceding claims, wherein the clamping screw (5) comprises a screw head (15) or a screw nut as a screw part (15), and/or wherein the clamping screw is configured as a carriage bolt.

8. The system (1) according to any of the preceding claims, wherein the clamping part (3) is configured rod-like, and/or wherein the clamping part (3) is accommodated substantially horizontal within the basic body.

9. The system (1) according to any of the preceding claims, wherein the clamping part (3) extends over more than half the length or more than 3/4 or more than 4/5 or substantially over the entire length of the basic body (1), and/or wherein the elongated hole (14) extends over more than 1/3 the length or more than half the length or more than 3/4 or more than 4/5 of the length of the clamping part (3).

10. The system (1) according to any of the preceding claims, wherein the elongated hole (14) is provided with lateral recesses (17), wherein the recesses (17) extend in particular on both sides of the elongated hole (14).

11. The system (1) according to any of the preceding claims, wherein the clamping block (6) is provided with an internal thread, and/or wherein the clamping block (6) is provided with a protruding threaded rod.

12. The system (1) according to any of the preceding claims, wherein at least two clamping jaws (25, 26) are comprised, wherein at least one of the clamping jaws (26) is adjustable.

13. The system (1) according to any of the preceding claims, wherein a machine vise (20) is configured on the basic body (1), and/or wherein a machine vise (20) is accommodated on, and fastened to, the basic body, and/or wherein the machine vise (20) is screwed to the basic body (1), or wherein the basic body (1) is configured on the machine vise (20).

14. The system (1) according to any of the preceding claims, wherein at least one sensor is comprised.

## Revendications

1. Système (100) de support au serrage d'une pièce à usiner (200) sur une table de machine (300) notamment équipée de rainures de serrage (301) et notamment de rainures en T d'une machine-outil telle qu'une perceuse, comprenant un corps de base (1) et une pièce de serrage (3) logée dans le corps de base (1), qui s'étend à l'intérieur d'un réceptacle (7) du corps de base (1) dans une direction longitudinale (8) entre deux extrémités (11, 12) et dans lequel la pièce de serrage (3) est maintenue de manière réglable en hauteur par une tige filetée (2), la tige filetée (2) étant guidée dans une ouverture de passage (9) du corps de base (1) et étant supporté sur le corps de base (1) et dans lequel la tige filetée (2) a une extrémité d'outil (13) et dans lequel, lors d'une rotation de la tige filetée (2), un réglage de la hauteur de la partie de serrage (3) est effectué, la pièce de serrage (3) comprenant un trou oblong (14) et une vis de serrage (5) du système (100) étant guidée à travers le trou oblong (14) de la pièce de serrage (3), la vis de serrage (5) comprenant une partie de vissage élargie (15) et étant supportée avec la partie de vissage (15) sur la pièce de serrage (3) et la vis de serrage (5) pouvant être connectée avec un bloc de serrage (6) agencé dans une rainure de serrage (301) de la table de machine (300), la vis de serrage (5) pouvant être serrée et le corps de base (1) pouvant être serré sur la table de machine (300) en réglant la hauteur de la tige filetée (2), et la base le corps (1) pouvant pivoter autour de la vis de serrage (5) et se déplacer à l'intérieur du trou oblong (14) avant que la vis de serrage (5) ne soit serrée afin d'aligner le corps de base (1) sur la table de la machine ( 300), **caractérisé en ce que** la pièce de serrage (3) est maintenue de manière réglable en hauteur à l'une des deux extrémités (11, 12) par l'intermédiaire de la tige filetée (2).

2. Système selon la revendication 1, dans lequel la pièce de serrage est maintenue de manière réglable en hauteur à une première extrémité (11) par l'intermédiaire de la tige filetée (2) et est logée à la deuxième extrémité de manière à pouvoir pivoter autour d'un axe horizontal (4).

3. Système (1) selon l'une des revendications précédentes, dans lequel la pièce de serrage (3) est maintenue dans le logement (7) du corps de base (1) de manière solidaire en rotation.

4. Système selon la revendication précédente, dans lequel le logement (7) est formé plus haut que la partie de serrage (3).

5. Système (1) selon l'une des revendications précédentes, dans lequel la tige filetée (2) comprend une tête de vis (13) comme extrémité d'outil.

6. Système (1) selon l'une des revendications précédentes, dans lequel l'ouverture de passage (9) présente un filetage intérieur dans lequel la tige filetée (2) est vissée.

7. Système (1) selon l'une des revendications précédentes, dans lequel la vis de serrage (5) comprend une tête de vis (15) ou un écrou en tant que partie de vissage (15) et/ou dans lequel la vis de serrage est conçue comme une vis à tête bombée.

8. Système (1) selon l'une des revendications précédentes, dans lequel la pièce de serrage (3) est en forme de tige et/ou dans lequel la pièce de serrage (3) est logée essentiellement horizontalement à l'intérieur du corps de base.

9. Système (1) selon l'une des revendications précédentes, dans lequel la pièce de serrage (3) s'étend sur plus d'une demi-longueur ou plus de 3/4 ou plus de 4/5 de la longueur ou sensiblement toute la longueur du corps de base (1) et/ou dans lequel le trou oblong (14) s'étend sur plus de 1/3 de la longueur ou plus de la moitié d'une longueur ou plus de 3/4 ou plus de 4/5 de la longueur de la pièce de serrage (3).

10. Système (1) selon l'une des revendications précédentes, dans lequel des évidements latéraux (17) sont ménagés sur le trou oblong (14), les évidements (17) s'étendant notamment de part et d'autre du trou oblong (14).

11. Système (1) selon l'une des revendications précédentes, dans lequel le bloc de serrage (6) est équipé d'un filetage intérieur et/ou dans lequel le bloc de serrage (6) est équipé d'une tige filetée en saillie.

12. Système (1) selon l'une des revendications précédentes, dans lequel au moins deux mâchoires de serrage (25, 26) sont comprises, dont au moins une mâchoire de serrage (26) est réglable.

13. Système (1) selon l'une des revendications précédentes, dans lequel un étau de machine (20) est formé sur le corps de base (1) et/ou dans lequel un étau de machine (20) est reçu et fixé sur le corps de base et/ou dans lequel l'étau de machine (20) est vissé au corps de base (1) ou dans lequel le corps de base (1) est formé sur l'étau de machine (20).

14. Système (1) selon l'une quelconque des revendications précédentes, dans lequel au moins un capteur est compris.
